# EUROPEAN PATENT SPECIFICATION

(11) **EP 0 689 383 B1**
(45) Date of publication and mention of the grant of the patent: **05.01.2000**
(21) Application number: 94910359.2
(22) Date of filing: 18.03.1994
(51) Int. Cl.: A23C 9/127

(54) **METHOD FOR PRODUCTION OF AN ACIDIFIED EDIBLE GEL ON MILK BASIS, AND USE OF SUCH GEL**
VERFAHREN ZUR HERSTELLUNG EINES ESSBAREN, ANGESÄUERTEN, AUF MILCH BASIERTEN GELES UND VERWENDUNG DAVON
PROCEDE DE FABRICATION D'UN GEL COMESTIBLE ACIDIFIE A BASE DE LAIT, ET APPLICATION DE CE GEL

(30) Priority: 19.03.1993 DK 31293
(43) Date of publication of application: 03.01.1996
(60) Divisional application: 99111196.4
(73) Proprietor: NOVO NORDISK A/S, 2880 Bagsvaerd (DK)
(72) Inventor: BUDOLFSEN, Gitte, DK-2000 Frederiksberg (DK); NIELSEN, Per, Munk, DK-3400 Hillerod (DK)
(74) Representative: Pedersen, Karen Oestergaard
(86) International application number: DK9400109
(87) International publication number: WO9421129

(56) References cited:
- Dialog Information Service, File 50, CAB ABSTRACTS, Dialog Accession No. 1258838, CAB Accession No. 0D054-03006, RAO, D.S.: "Enzymatic Modification of Milk Proteins During Processing - a Possible Role for Native Milk Proteinase", Indian Dairyman 1991, 43 (11) p. 514-517.
- CHEMICAL ABSTRACTS, Volume 118, No. 7, 15 February 1993 (15.02.93), (Columbus, Ohio, USA), NONAKA, M. et al., "Sodium Caseinate and Skim Milk Gels Formed by Incubation with Microbial Transglutaminase", page 713, the Abstract No. 58314b, J. Food Sci. 1992, 57 (5), 1214-1241, (Eng.).
- CHEMICAL ABSTRACTS, Volume 112, No. 1, 1 January 1990 (01.01.90), (Columbus, Ohio, USA), page 618, the Abstract No. 6095n; & JP,A,01 027 471 (Ajinomoto Co., Inc. et al.) 30 January 1989.
- PATENT ABSTRACTS OF JAPAN, Vol. 7, No. 268, C-197; & JP,A,58 149 645 (Ajinomoto K.K.), 6 Sept 1983.
- Dialog Information Service, File 50, CAB ABSTRACTS, Dialog Accession No. 1422994, CAB Accession No. 0D055-03167, IKURA, K. et al.: "Use of Transglutaminase in Quality-Improvement and Processing of Food Proteins", Comments on Agricultural and Food Chemistry 1992, 2 (6) p. 389-407.
- PATENT ABSTRACTS OF JAPAN, Vol. 8, No. 156, C-234; & JP,A,59 059 151 (Ajinomoto K.K.), 4 April 1984.

## Description

Many efforts have been exercised in order to generate derived milk products of nutritional value and with improved functional and/or organoleptic properties, including acidified, edible gels on milk basis. A typical example of such products is desserts, especially yoghurt and curd. In order to prepare such desserts of satisfactory quality it is necessary either to add both emulsifying agents and stabilizing agents in rather large amounts or to conduct the production process as a slow fermentation.

It is the purpose of the invention to provide a method for production of an acidified edible gel on milk basis, which exhibits satisfactory functional and/or organoleptic properties differing from the prior art acidified edible gels on milk basis like yoghurt and curd, and in relation to which it is not necessary to add any emulsifying or stabilizing agents and in relation to which it is possible to conduct the production process as a rapid pH reduction, and a use of such gel.

The method according to the invention for production of an acidified edible gel on milk basis is characterized by the fact that in a first step transglutaminase is added to milk or a milk like product, that in a second step the pH of the transglutaminase containing milk or milk like product is adjusted to 4.8 to 5.8, and that in a third step the pH-adjusted, transglutaminase containing milk or milk like product is exposed to a heat treatment.

In this specification with claims the term "milk or a milk like product" is to be understood as whole milk, skim milk, cream or a milk product with a fat content from 0% to 50% originating from any animal, preferably a cow, as such or slightly modified, e.g. by addition of flavorants. Also, it is to be understood that the milk or milk like product can be produced by suspending skim milk powder and/or full fat milk powder in an aqueous medium. Furthermore it is to be understood that the protein content of the milk or milk like product, and thus also the protein content of the acidified edible gel, is of the order of magnitude 2.0 to 6.0% w/w.

Also, it goes without saying that the concentration of Ca⁺⁺ is supposed to be of such value that Ca⁺⁺ is able to activate the transglutaminase.

Transglutaminase can be added in a dosage measured in g of pure transglutaminase per g of the protein content of the milk product, or in a dosage based on the transglutaminase activity unit, indicated in P.D. Bishop et al., Biochemistry, 29, 1990, pp. 1861-1869.

Surprisingly it has been found that the gel which has a low protein content has a pleasant consistency and mouth feeling and exhibits satisfactory organoleptic properties. These organoleptic properties can be improved by addition of flavorants to the milk or milk like product. Also, it is surprising that no emulsifying or stabilizing agents need to be added in relation to the method according to the invention. The reason for this is not completely understood, but it may be assumed as a hypothesis that the transglutaminase crosslinks the proteins in the milk or milk like product, whereby a lattice or network is generated, which do not need either emulsifying or stabilizing agents due to its own inherent stability. Furthermore, it suprisingly has been found that the production of the acidified edible gel according to the invention can be carried out with a rapid pH reduction.

From Japanese unexamined patent application No. JP-A-3-160957 a gel on the basis of a transglutaminase modified milk protein is described. However, in the prior art no pH reduction is described, and also, the protein content of the milk or milk like product used as a starting material is around 10%, i.e. much higher than in relation to this invention.

In a preferred embodiment of the method according to the invention the transglutaminase is used in an amount of between 0.1 and 0.5% w/w, related to the amount of milk protein. In this manner an edible gel with satisfactory organoleptic characteristics can be obtained.

In a preferred embodiment of the method according to the invention the transglutaminase is of human, of bovine or of microbial origin. In this manner a transglutaminase with a satisfactory activity can be obtained.

In a preferred embodiment of the method according to the invention a heat treatment is carried out between the first and the second step, preferably at a temperature between 60 - 100°C, and in a time range between 0.5 and 10 minutes. In this manner an edible gel with improved organoleptic characteristics can be obtained.

In a preferred embodiment of the method according to the invention the milk or milk like product is whole milk, to which a flavorant has been added, preferably orange juice. In this manner an edible gel with improved organoleptic characteristics can be obtained.

In a preferred embodiment of the method according to the invention the heat treatment is carried out at a temperature between 60 and 140°C and a time range between 0.5 and 20 minutes, preferably at a temperature between 70 and 100°C and at a time range between 0.5 and 10 minutes. These intervals for temperature and time are optimal for the gelation of the transglutaminase treated milk or milk like product.

Also, the invention comprises a use of the acidified edible gel on milk basis producible by means of the method according to the invention, as a yoghurt mousse, a cheese, or as a pickling liquid for meat. In regard to the use as a pickling liquid for meat it is to be noted 1) that the transglutaminase containing milk or milk like product immediately before the heat treatment is injected into the meat or mixed intimately with the meat, and that the heat treatment is performed after the injection or the intimate mixing, and 2) that any kind of meat can be used in relation to this use, e.g. ham or fish meat. In relation to the use of the gel as a pickling liquid for meat it is to be noted that a gel cannot be injected into the meat; thus, in this case the third step of the method for production of the gel will only be performed after the injection of the pH-adjusted, transglutaminase containing milk or milk like product into the meat.

The method according to the invention will be illustrated in the following example.

### EXAMPLE 1

To 100 g milk (pH 6.68) is added 0.014 g of active human transglutaminase. 9.2 g of black currant juice and 11 g of orange juice is added, whereby pH of the total mixture changes to 5.20.

100 ml of the total mixture is subsequently treated in a microwave oven for 50 seconds with an effect of 520 watt, whereby an organoleptically acceptable gel is formed.

If a similar experiment without addition of transglutaminase is performed, the end product remains liquid.

### EXAMPLE 2

To 100 g portions of reconstituted skim milk made with either 9%, 15% or 30% skim milk powder is added 0.014 g, 0.023 g and 0.047 g of active human transglutaminase (FXIIIa).

The portions are then incubated at 37°C for 45 minutes.

The portions are then acidified to pH 5.0 with HCl, Citric Acid and Glucone- delta- Lactone, respectively. The portions are then heated in a microwave oven for 50 seconds with an effect of 520 watt, whereby organoleptically acceptable gels are formed.

If a similar experiment without addition of transglutaminase is performed no gel is formed.

## Claims

1. Method for production of an acidified edible gel on milk basis, characterized by the fact that in a first step transglutaminase is added to milk or a milk like product, that in a second step the pH of the transglutaminase containing milk or milk like product is adjusted to 4.8 to 5.8, and that in a third step the pH-adjusted, transglutaminase containing milk or milk like product is exposed to a heat treatment.

2. Method according to Claim 1, characterized by the fact that the transglutaminase is used in an amount of between 0.1 and 0.5% w/w, related to the amount of milk protein.

3. Method according to Claim 1 or 2, characterized by the fact that the transglutaminase is of human, of bovine or of microbial origin.

4. Method according to Claims 1 - 3, characterized by the fact that between the first and the second step a heat treatment is carried out, preferably at a temperature between 60 - 100°C, and in a time range between 0.5 and 10 minutes.

5. Method according to Claims 1 - 4, characterized by the fact that the milk or milk like product is whole milk, to which a flavorant has been added, preferably orange juice.

6. Method according to Claims 1 - 5, characterized by the fact that the heat treatment is carried out at a temperature between 60 and 140°C and a time range between 0.5 and 20 minutes, preferably at a temperature between 70 and 100°C and at a time range between 0.5 and 10 minutes.

7. Use of the acidified edible gel on milk basis producible by means of the method according to Claims 1 - 6, as a yoghurt mousse, a cheese, or as a pickling liquid for meat.

## Patentansprüche

1. Verfahren zur Herstellung eines eßbaren Sauermilchgels, dadurch gekennzeichnet, daß zu Milch oder zu einem Milchprodukt in einem ersten Schritt Transglutaminase zugesetzt wird, daß in einem zweiten Schritt der pH-Wert der Transglutaminase-haltigen Milch oder des Transglutaminase-haltigen Milchproduktes auf 4,8 bis 5,8 eingestellt wird und daß in einem dritten Schritt die pH-Wert-eingestellte, Transglutaminase-haltige Milch oder das pH-Wert-eingestellte, Transglutaminase-haltige Milchprodukt einer Wärmebehandlung unterzogen wird.

2. Verfahren nach Anspruch 1, dadurch gekennzeichnet, daß die Transglutaminase, bezogen auf die Menge an Milchprotein, in einer Menge zwischen 0,1 und 0,5 Gew.-% verwendet wird.

3. Verfahren nach Anspruch 1 oder 2, dadurch gekennzeichnet, daß die Transglutaminase vom Menschen, vom Rind oder von Mikroorganismen stammt.

4. Verfahren nach den Ansprüchen 1 - 3, dadurch gekennzeichnet, daß zwischen dem ersten und zweiten Schritt eine Wärmebehandlung vorzugsweise bei einer Temperatur zwischen 60 - 100 °C und für die Dauer zwischen 0,5 und 10 min durchgeführt wird.

5. Verfahren nach den Ansprüchen 1 - 4, dadurch gekennzeichnet, daß die Milch oder das Milchprodukt Vollmilch ist, der ein Aromastoff, vorzugsweise Orangensaft, zugesetzt worden ist.

6. Verfahren nach den Ansprüchen 1 - 5, dadurch gekennzeichnet, daß die Wärmebehandlung bei einer Temperatur zwischen 60 - 140 °C und für eine Dauer zwischen 0,5 und 20 min, vorzugsweise bei einer Temperatur zwischen 70 - 100 °C und für eine Dauer zwischen 0,5 und 10 min, durchgeführt wird.

7. Verwendung des eßbaren Sauermilchgels, das durch das Verfahren nach den Ansprüchen 1 - 6 herstellbar ist, als Joghurt, Mousse, Käse oder als Pöckellake für Fleisch.

## Revendications

1. Procédé pour la production d'un gel comestible acidifié à base de lait, caractérisé par le fait que dans une première étape on ajoute la transglutaminase au lait ou au produit analogue au lait, que dans une seconde étape on ajuste le pH du lait ou produit analogue au lait contenant la transglutaminase à 4,8 jusqu'à 5,8, et que dans une troisième étape le lait ou produit analogue au lait contenant la transglutaminase au pH ajusté est exposé à un traitement thermique.

2. Procédé selon la revendication 1, caractérisé par le fait que l'on utilise la transglutaminase dans une quantité entre 0,1 et 0,5 % en poids, rapporté à 1a quantité de protéines du lait.

3. Procédé selon la revendication 1 ou 2, caractérisé par le fait que la transglutaminase est d'origine humaine, bovine ou microbienne.

4. Procédé selon les revendications 1 à 3, caractérisé par le fait qu'entre la première et la seconde étape on procède à un traitement thermique, de préférence a une température entre 60 et 100°C, dans une plage de temps entre 0,5 et 10 minutes.

5. Procédé selon les revendications 1 à 4, caractérisé par le fait que le lait ou produit analogue au lait est du lait complet auquel on a ajouté un agent de saveur, de préférence du jus d'orange.

6. Procédé selon les revendications 1 à 5, caractérisé par le fait que le traitement thermique s'effectue à une température entre 60 et 140°C et une plage de temps entre 0,5 et 20 minutes, de préférence à une température entre 70 et 100°C et une plage de temps entre 0,5 et 10 minutes.

7. Utilisation du gel comestible acidifié à base de lait pouvant être produit au moyen du procédé selon les revendications 1 à 6, sous forme de yaourt, fromage ou liquide de conservation pour la viande.
